# EUROPÄISCHE PATENTSCHRIFT

(11) **EP 3 382 253 B1**
(45) Veröffentlichungstag und Bekanntmachung des Hinweises auf die Patenterteilung: **12.04.2023**
(21) Anmeldenummer: 18152206.1
(22) Anmeldetag: 18.01.2018
(51) Int. Cl.: F16L 41/08, F16L 47/28

(54) **GASDICHTE KUNSTSTOFF-ROHRABZWEIGUNG**
GAS-TIGHT PLASTIC PIPE BRANCH
DÉRIVATION EN MATIÈRE PLASTIQUE ÉTANCHE AU GAZ

(30) Priorität: 28.03.2017 DE 102017205223
(43) Veröffentlichungstag der Anmeldung: 03.10.2018
(73) Patentinhaber: ContiTech Techno-Chemie GmbH, 61184 Karben (DE)
(72) Erfinder: Messerschmidt, Jonathan, 71540 Murrhardt (DE)
(74) Vertreter: Continental Corporation

(56) Entgegenhaltungen:
- EP-A2- 0 339 156
- DE-A1- 4 102 700
- DE-C1- 3 430 053

## Beschreibung

Die Erfindung betrifft eine gasdichte Kunststoff-Rohrabzweigung, aufweisend einen ersten Rohrleitungsabschnitt und einen zweiten Rohrleitungsabschnitt.

Gasdichte Rohrabzweigungen sind häufig geschweißt oder geklebt. Außerdem sind auch vorgefertigte T- oder Y-Stücke bekannt, an die die weiterführenden Kunststoff-Rohrabschnitte ansteckbar, anschraubbar oder auch wieder anklebbar oder anschweißbar sind.

In der DE 17 200 36 U ist eine eingeschweißte Rohrabzweigung offenbart, bei der zur Vermeidung vorzeitigen Versagens die durch die Schweißung verursachte Schwächung der Rohrleitung verstärkende Auflagen Verwendung finden. Diese sind jedoch selbst auch wieder auf die Rohre geschweißt.

Diese Art der Verbindung ist trotz relativ hohen Aufwands anfällig gegen Schweißfehler, so das eine Gasdichtheit problematisch sein kann.

In der DE 172 03 89 U ist eine Abzweigung an Kunststoffrohren offenbart, bei der die Schweißung nicht direkt an der Kontaktstelle zwischen den Rohren, sondern an einer übergestülpten Verstärkungsmuffe vorgenommen wurde. Dies verstärkt zwar die Verbindung, kann jedoch auch die Gefahr von Undichtigkeiten bei Schweißfehlern nicht aufheben.

In der DE 184 16 81 U ist ein Rohrverbindungsstück offenbart, das als Kombination aus einem spritzgegossenen Zentralteil mit angeklebten Ergänzungsstücken ausgebildet ist.

Hier ist die eigentliche Abzweigung zwar als ein gesamtheitliches Teil ausgeführt, jedoch müssen hier weitere Bauteile angefügt werden, wobei dann wieder bei der Klebeverbindung Undichtigkeiten auftreten können.

Die DE 3430053 C1 offenbart eine Schlauchabzweigung, bei der aus einer Abzweigöffnung eines Gummischlauches eine an der Schlauchinnenwand anschlagende Hülse herausragt. Über den herausragenden Teil der Hülse ist ein Abzweigschlauch gestülpt. Zur Fixierung der Hülse an den Schlauchteilen wird in eine umlaufende Ausnehmung der Hülse eine vulkanisierfähige Kautschukmasse eingespritzt, die nach einer Vulkanisation der Gesamtkonstruktion eine Haftverbindung mit der Schlauchwand eingeht. Zudem wird die gesamte Abzweigung von außen mit einer Kautschukmischung umspritzt. Allerdings ist diese Konstruktion nicht problemlos auf Rohrverbindungen übertragbar, weil hierbei z.B. die aufgeweitete Hülse nicht von außen in die Öffnung einsetzbar wäre.

Die EP 0339156 A2 offenbart eine Rohrabzweigung, bei der eine Metallhülse durch eine Bohrung in das Rohr eingeführt, der in dem Rohr befindliche Teil der Hülse anschließend mit einem Dorn aufgeweitet und an der Rohrinnenwand angeschlagen wird. Hierzu wird allerdings eine komplex aufgebaute Vorrichtung benötigt, die umständlich zu bedienen ist. Insbesondere für die Applikation von Füllventilen, Drucksensoren oder ähnlichem sind die bekannten Verfahren dementsprechend nicht optimal.

Der Erfindung liegt die Aufgabe zugrunde, eine Rohrabzweigung der geschilderten Art derart umzugestalten, dass eine sichere gasdichte Verbindung der Abzweigstelle gegeben ist.

Diese Aufgabe wird dadurch gelöst, dass
- der erste Rohrleitungsabschnitt eine Abzweigbohrung aufweist und
- der zweite Rohrleitungsabschnitt einen rohrförmigen Absatz mit einer endseitigen Kontur (8) aufweist, wobei die endseitige Kontur in die Abzweigbohrung des ersten Rohrleitungsabschnitts hineinsteckbar ist und eine Aufnahme für ein Dichtelement aufweist und
- ein Dichtelement in der Aufnahme der endseitigen Kontur des zweiten Rohrleitungsabschnitts angeordnet ist,

wobei das Dichtelement bei eingesteckter Kontur des zweiten Rohrleitungsabschnitts in die Abzweigbohrung des ersten Rohrleitungsabschnitts zwischen dem ersten Rohrleitungsabschnitt und dem zweiten Rohrleitungsabschnitt zu liegen kommt und erster und zweiter Rohrleitungsabschnitt mit rohrförmigem Absatz und Dichtelement in einem vorbestimmten Bereich um die Abzweigung herum im Wesentlichen vollständig mit einem Kunststoffmaterial umspritzt sind,
wobei der rohrförmige Absatz des zweiten Rohrleitungsabschnitts zusätzlich mindestens ein Verankerungselement aufweist und das Verankerungselement im Wesentlichen vollständig mit dem Kunststoffmaterial umspritzt ist und das Dichtelement zwischen dem Verankerungselement und der Wandung des ersten Rohrleitungsabschnitts eingeklemmt ist.

Durch diese Ausgestaltung ist die Gasdichtheit durch das Dichtelement gegeben. Eine gasdichte Schweißung oder Klebung ist nicht erforderlich. Die Umspritzung mit Kunststoff sorgt für einen guten Halt der beiden Rohrleitungsabschnitte zueinander, wobei besondere Anforderungen an Gasdichtheit nicht bestehen.

In einer Weiterbildung der Erfindung ist das Verankerungselement als radial von dem rohrförmigen Absatz des zweiten Rohrleitungsabschnitts abragendes Formelement ausgebildet und ist das abragende Formelement im Wesentlichen vollständig mit dem Kunststoffmaterial umspritzt.

Ein derartiges Verankerungselement ist nach dem Umspritzen der Verbindung in dem umspritzten Kunststoff formschlüssig eingebettet. Es erhöht die Festigkeit der Verbindung, sodass eine hohe formschlüssige Sicherheit gegen ein unbeabsichtigtes Lösen der Verbindung gegeben ist.

In einer Weiterbildung der Erfindung weist das Kunststoffmaterial der Umspritzung einen vorbestimmten Schrumpf bei der Abkühlung auf.

Durch einen derartigen Schrumpf sind die Rohrleitungsabschnitte bei der Abkühlung der Umspritzung gegeneinander pressbar, was die Sicherheit für die Gasdichtheit nochmals verbessert.

Anhand der Zeichnung wird nachstehend ein Beispiel der Erfindung näher erläutert.

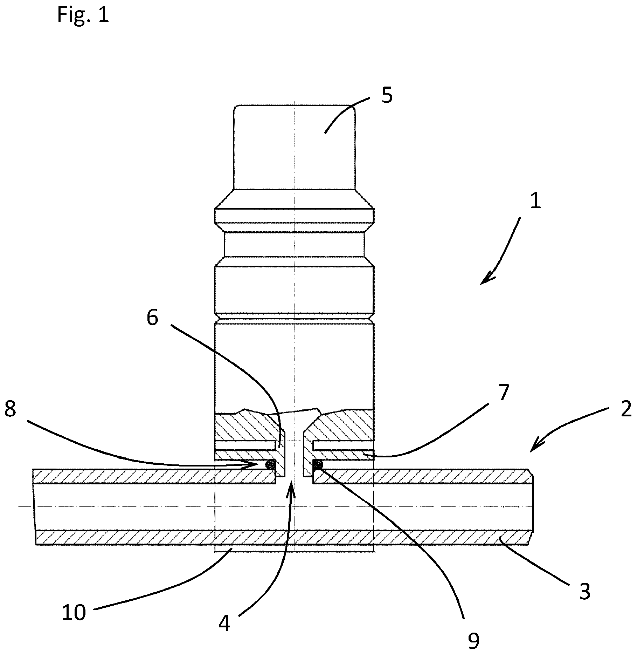

Die Fig. 1 zeigt eine erfindungsgemäße Rohrabzweigung 1 in einem Teillängsschnitt. Ein erster Rohrabschnitts 2 weist eine Wand 3 aus Kunststoff auf, in die eine Abzweigbohrung 4 eingebracht ist.

Ein aus Kunststoff bestehendes Füllventil 5 weist einen rohrförmigen Absatz 6 auf. Am Absatz 6 ist ein vom rohrförmigen Absatz 6 abragendes Verankerungselement 7 angeordnet.

Weiter weist der rohrförmige Absatz 6 eine endseitigen Kontur 8 auf, die in die Abzweigbohrung 4 des ersten Rohrleitungsabschnitts 2 eingepasst ist. Auf der endseitigen Kontur 8 ist eine Dichtung 9 angeordnet, die zwischen dem Verankerungselement 7 und der Wandung 3 des ersten Rohrleitungsabschnitts 2 eingeklemmt ist. Die Dichtung 9 sorgt für eine Gasdichteabdichtung zwischen dem rohrförmigen Absatz 6 und dem Rohrleitungsabschnitts 2 im Bereich der Abzweigbohrung 4.

Um den Rohrleitungsabschnitts 2 herum ist eine Kunststoffumspritzung 10 angeordnet, die auch den aus der Bohrung 4 herausragenden Teil des rohrförmigen Absatzes 6, das Verankerungselement 7 und die Dichtung 9 umgreift. Die Umspritzung ist aus einem Kunststoffmaterial ausgebildet, dass beim Erkalten einen vorbestimmten Schrumpf aufweist. Dadurch ist die Dichtung 9 zwischen dem Rohrleitungsabschnitts 2, der Kontur 8 und dem Verankerungselement 7 eingepresst.

Die gezeigte Anordnung weist eine hohe Sicherheit gegen unbeabsichtigte Trennung des Füllventils 5 vom Rohrleitungsabschnitts 2 bei gleichzeitig sicherer Gasdichtheit auf.

### Bezugszeichenliste

### (Teil der Beschreibung)

- 1: Rohrabzweigung
- 2: erster Rohrleitungsabschnitt
- 3: Wand des ersten Rohrabschnitts 2
- 4: Abzweigbohrung in der Wand 3
- 5: Füllventil, zweiter Rohrleitungsabschnitt
- 6: rohrförmiger Absatz des Füllventils 5
- 7: Verankerungselement am rohrförmigen Absatz 6
- 8: endseitigen Kontur des Absatzes 6
- 9: Dichtung
- 10: Kunststoffumspritzung, Kunststoffmaterial

## Patentansprüche

1. Gasdichte Kunststoff-Rohrabzweigung (1) aufweisend einen ersten Rohrleitungsabschnitt (2) und einen zweiten Rohrleitungsabschnitt (5), wobei der erste Rohrleitungsabschnitt (2) eine Abzweigbohrung (4) aufweist und der zweite Rohrleitungsabschnitt (5) einen rohrförmigen Absatz (6) mit einer endseitigen Kontur (8) aufweist, wobei die endseitige Kontur (8) in die Abzweigbohrung (4) des ersten Rohrleitungsabschnitts (2) hineinsteckbar ist und eine Aufnahme für ein Dichtelement (9) aufweist und ein Dichtelement (9) in der Aufnahme der endseitigen Kontur (8) des zweiten Rohrleitungsabschnitts (5) angeordnet ist, wobei das Dichtelement (9) bei eingesteckter Kontur (8) des zweiten Rohrleitungsabschnitts (5) in die Abzweigbohrung (4) des ersten Rohrleitungsabschnitts (2) zwischen dem ersten Rohrleitungsabschnitt (2) und dem zweiten Rohrleitungsabschnitt (5) zu liegen kommt und erster und zweiter Rohrleitungsabschnitt (2, 5) mit rohrförmigem Absatz (6) und Dichtelement (9) in einem vorbestimmten Bereich um die Abzweigung herum im Wesentlichen vollständig mit einem Kunststoffmaterial (10) umspritzt sind, wobei der rohrförmige Absatz (8) des zweiten Rohrleitungsabschnitts (5) zusätzlich mindestens ein Verankerungselement (7) aufweist, wobei das Verankerungselement (7) im Wesentlichen vollständig mit dem Kunststoffmaterial (10) umspritzt ist, **dadurch gekennzeichnet, dass** das Dichtelement (9) zwischen dem Verankerungselement (7) und der Wandung (3) des ersten Rohrleitungsabschnitts (2) eingeklemmt ist.

2. Gasdichte Kunststoff-Rohrabzweigung (1) nach Anspruch 1, **dadurch gekennzeichnet, dass** das Verankerungselement (7) als radial vom rohrförmigen Absatz (8) des zweiten Rohrleitungsabschnitts (5) abragendes Formelement (7) ausgebildet ist und das abragende Formelement (7) im Wesentlichen vollständig mit dem Kunststoffmaterial (10) umspritzt ist.

3. Gasdichte Kunststoff-Rohrabzweigung (1) nach Anspruch 1 oder 2, **dadurch gekennzeichnet, dass** das Kunststoffmaterial (10) der Umspritzung einen vorbestimmten Schrumpf bei der Abkühlung aufweist.

## Claims

1. Gas-tight plastic pipe branch (1) having a first pipeline section (2) and having a second pipeline section (5), wherein the first pipeline section (2) has a branch bore (4), and the second pipeline section (5) has a tubular shoulder (6) with an end-side contour (8), wherein the end-side contour (8) is able to be plugged into the branch bore (4) of the first pipeline section (2) and has a receptacle for a sealing element (9), and a sealing element (9) is arranged in the receptacle of the end-side contour (8) of the second pipeline section (5), wherein, with the contour (8) of the second pipeline section (5) plugged into the branch bore (4) of the first pipeline section (2), the sealing element (9) comes to lie between the first pipeline section (2) and the second pipeline section (5), and the first and second pipeline sections (2, 5), with tubular shoulder (6) and sealing element (9), are, in a predetermined region around the branch, substantially completely encapsulated with a plastic material (10), wherein the tubular shoulder (8) of the second pipeline section (5) additionally has at least one anchoring element (7), wherein the anchoring element (7) is substantially completely encapsulated with the plastic material (10), **characterized in that** the sealing element (9) is clamped between the anchoring element (7) and the wall (3) of the first pipeline section (2).

2. Gas-tight plastic pipe branch (1) according to Claim 1, **characterized in that** the anchoring element (7) is formed as a shaped element (7) projecting radially from the tubular shoulder (8) of the second pipeline section (5), and the projecting shaped element (7) is substantially completely encapsulated with the plastic material (10).

3. Gas-tight plastic pipe branch (1) according to Claim 1 or 2, **characterized in that** the plastic material (10) of the encapsulation has a predetermined shrinkage during cooling.

## Revendications

1. Dérivation de tube de matière synthétique étanche aux gaz (1), laquelle comporte une première portion de canalisation (2) et une deuxième portion de canalisation (5), la première portion de canalisation (2) comportant un alésage de dérivation (4) et la deuxième portion de canalisation (5) comportant une saillie tubulaire (6) pourvue d'un contour d'extrémité (8), le contour d'extrémité (8) pouvant être inséré dans l'alésage de dérivation (4) de la première portion de canalisation (2) et comportant un logement destiné à un élément d'étanchéité (9) et un élément d'étanchéité (9) étant disposé dans le logement du contour d'extrémité (8) de la deuxième portion de canalisation (5), l'élément d'étanchéité (9) venant se situer entre la première portion de canalisation (2) et la deuxième portion de canalisation (5) lorsque le contour (8) de la deuxième portion de canalisation (5) est inséré dans l'alésage de dérivation (4) de la première portion de canalisation (2) et les première et deuxième portions de canalisation (2, 5) pourvues de la saillie tubulaire (6) et de l'élément d'étanchéité (9) étant sensiblement entièrement surmoulées avec une matière synthétique (10) dans une zone prédéterminée autour de la dérivation, la saillie tubulaire (8) de la deuxième portion de canalisation (5) comportant en outre au moins un élément d'ancrage (7), l'élément d'ancrage (7) étant sensiblement entièrement encapsulé avec la matière synthétique (10), **caractérisée en ce que** l'élément d'étanchéité (9) est inséré entre l'élément d'ancrage (7) et la paroi (3) de la première portion de canalisation (2).

2. Dérivation de tube de matière synthétique étanche aux gaz (1) selon la revendication 1, **caractérisée en ce que** l'élément d'ancrage (7) est réalisé sous la forme d'un élément moulé (7) qui fait saillie radialement de la saillie tubulaire (8) de la deuxième portion de canalisation (5) et l'élément moulé en saillie (7) est sensiblement entièrement surmoulé avec la matière synthétique (10).

3. Dérivation de tube de matière synthétique étanche aux gaz (1) selon la revendication 1 ou 2, **caractérisée en ce que** la matière synthétique (10) du surmoulage présente une rétraction prédéterminée lors du refroidissement.
